# FASCICULE DE BREVET EUROPEEN

(11) **EP 0 439 975 B1**
(45) Date de publication et mention de la délivrance du brevet: **16.06.1993**
(21) Numéro de dépôt: 90403594.6
(22) Date de dépôt: 14.12.1990
(51) Int. Cl.: B23K 9/127, B23K 9/028

(54) **Système mécanique de guidage automatique d'une ou plusieurs torches d'une unité de soudage à l'arc**
Mechanisches System zur automatischen Führung eines oder mehrerer Brenner eines Lichtbogenschweissgerätes
Mechanic system for automatically guiding one or several burners of an arc welding appliance

(30) Priorité: 29.12.1989 FR 8917412
(43) Date de publication de la demande: 07.08.1991
(73) Titulaire: SERIMER Société à Responsabilité Limitée, F-92000 Nanterre (FR)
(72) Inventeur: Poirier, Norbert, F-92000 Nanterre (FR)
(74) Mandataire: Lefebure, Gérard

(56) Documents cités:
- WO-A-85/05302
- FR-A- 2 613 265
- GB-A- 2 067 310
- PATENT ABSTRACTS OF JAPAN vol. 7, no. 50 (M-197), 26 février 1983; & JP - A - 57199570 (NIPPON KOKAN K.K.) 07.12.1982
- PATENT ABSTRACTS OF JAPAN vol. 10, no. 122 (M-476), 7 mai 1986; & JP - A - 60250881 (HITACHI KINZOKU K.K.) 11.12.1985
- idem

## Description

La présente invention concerne un système mécanique de guidage automatique d'une ou plusieurs torches d'une unité de soudage à l'arc dans une gorge délimitée entre les deux surfaces d'extrémité chanfreinées de deux pièces métalliques à souder l'une à l'autre, du type comprenant un chariot principal qui se déplace le long d'un guide fixe parallèle à la gorge, un chariot secondaire articulé au chariot principal et équipé d'un bloc support de torche(s) et d'un dispositif de guidage comprenant des organes de roulement en contact avec les surfaces des pièces métalliques qui bordent la gorge et des organes de palpage qui pénètrent à l'intérieur de la gorge (voir par exemple le document JP-A-60250881).

D'une manière générale, une machine automatique de soudage fait intervenir un nombre important de paramètres de fonctionnement liés au procédé de soudage utilisé, aux caractéristiques géométriques de la gorge délimitée entre les deux pièces à souder, aux conditions de soudage (nature, forme et position des pièces,...). Dans la majorité des applications industrielles, l'opération de soudage se réalise en plusieurs passes, sachant que l'obtention d'une soudure de qualité dépend de la précision avec laquelle est effectuée la première passe. Cela implique un usinage des surfaces d'extrémité à souder pour délimiter entre elles une gorge qui soit la plus régulière possible, et un système de guidage apte à suivre la géométrie de la gorge pour que la soudure soit appliquée très précisément au fond de la gorge, notamment lors de la première passe.

Aussi, il est couramment pratiqué un usinage sous la forme d'un chanfrein aux deux extrémités des pièces à souder. Suivant l'ouverture donnée au chanfrein, on obtient une gorge plus ou moins évasée, sachant qu'une gorge large augmente le nombre de passes et le temps de soudage, et qu'une gorge étroite, sans présenter ces inconvénients, n'est pas sans poser des problèmes au niveau du système de guidage, comme cela sera précisé plus loin.

Concrètement, même avec un tel usinage, la gorge délimitée par les deux chanfreins ne pourra présenter des caractéristiques géométriques constantes sur toute sa longueur. En effet, une fois les deux surfaces d'extrémité mises en regard l'une de l'autre, les tolérances de fabrication des pièces et d'usinage des chanfreins entraîneront nécessairement des variations de largeur et de dénivelé au niveau de la gorge. Dans le cas où les deux pièces à souder sont des tubes de relativement grande longueur par exemple et avec une tolérance d'usinage des chanfreins de ± 0,1 mm, il en résulte une largeur de gorge à ± 0,2 mm avec des dénivelés de 2 à 3 mm dûs en particulier à l'ovalisation des tubes.

Dans le cas où le procédé de soudage est un soudage à l'arc électrique visible sous gaz protecteur couramment utilisé pour le soudage bout à bout de tubes, les électrodes de soudage portées par les torches doivent pénétrer dans la gorge et se situer à une distance déterminée des parois et du fond de la gorge ou de la dernière couche de soudure déposée. Dans ces conditions, la précision du système de guidage prend toute son importance, notamment lorsqu'on utilise ce procédé de soudage dans une gorge étroite.

En conséquence, la précision de la soudure, notamment lors de la première passe, implique un positionnement précis des électrodes de soudage non seulement par rapport au plan médian de la gorge, mais également par rapport au fond de la gorge. Ces deux positionnements respectivement sensibles aux variations de largeur et de dénivelé de la gorge, seront d'autant plus respectés que le système de guidage sera précis.

Dans les systèmes mécaniques de guidage connus, les organes de roulement sont des galets qui roulent de part et d'autre ou d'un même côté de la gorge, et les organes de palpage sont également constitués par au moins un galet qui roule à l'intérieur de la gorge en prenant simultanément appui sur les deux parois de celle-ci. L'expérience montre que de tels organes de palpage d'une part ne prennent pas en compte les variations de largeur et de dénivelé de la gorge et, d'autre part, ne sont pas adaptés dans le cas d'une gorge étroite.

Le but de l'invention est de réaliser un système de guidage qui puisse assurer avec précision le positionnement des torches de soudage à l'intérieur de la gorge et qui soit capable de prendre en compte les variations de largeur et de dénivelé de celle-ci et améliorer ainsi la qualité du soudage qui est imposée dans certaines applications, en particulier pour le soudage bout à bout des tronçons de tube constituants des conduites destinées à être immergées au fond de la mer.

A cet effet, l'invention propose un système de guidage selon la revendication 1.

Selon un mode de réalisation, le dispositif de guidage comprend deux galets dont les boudins forment les organes de palpage et dont les bandages forment les organes de roulement.

Selon un mode préférentiel de réalisation de l'invention, chaque élément de palpage est constitué par un grain fixé à l'extrémité d'un doigt qui pénètre à l'intérieur de la gorge et dont la profondeur de pénétration est réglable, alors que chaque organe de roulement est formé d'une bille ou d'un galet plat.

Ainsi, grâce à ces différentes dispositions, les torches étant avantageusement disposées entre les deux organes de palpage, les variations de largeur et de dénivelé de la gorge ne sont que faiblement répercutées au niveau des électrodes de soudage, si bien que leur écart par rapport au plan médian et au fond de la gorge est réduit au minimum, ce qui implique un meilleur suivi des caractéristiques géométriques de la gorge et une meilleure précision dans le soudage.

D'autres avantages, caractéristiques et détails de l'invention ressortiront de la description explicative qui va suivre faite en référence aux dessins annexés donnés uniquement à titre d'exemple et dans lesquels:
- la figure 1 est une vue schématique de principe du système mécanique de guidage conforme à l'invention suivant une première forme de réalisation,
- la figure 2 est une vue en coupe schématique et simplifiée du système mécanique de guidage appliqué au soudage de tubes,
- la figure 3 est une vue de côté du système de guidage,
- et la figure 4 est une vue schématique d'un organe de palpage selon un mode préférentiel de réalisation de l'invention.

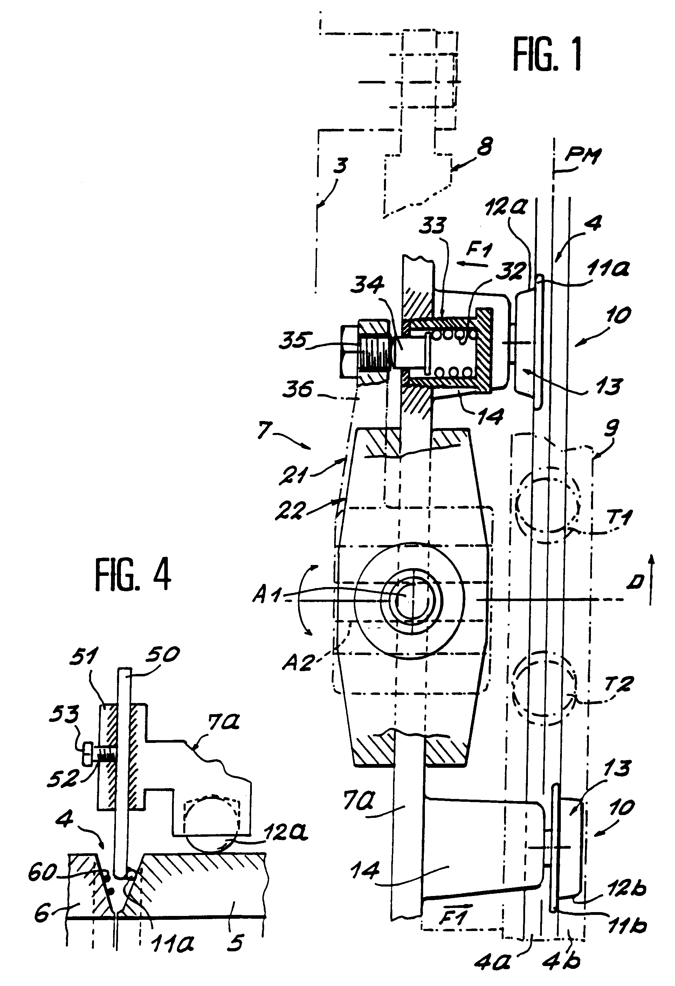

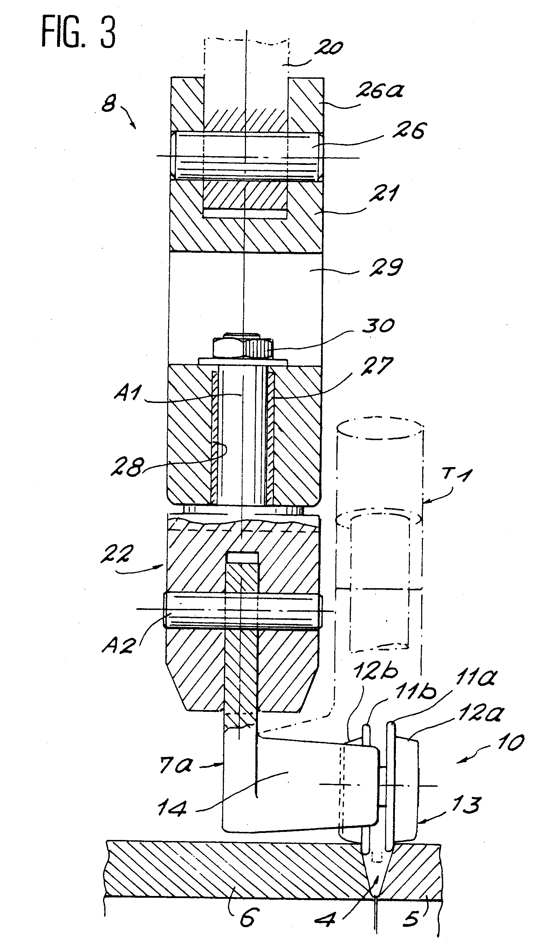

Le système mécanique de guidage automatique 1 d'une ou plusieurs torches d'une unité de soudage à l'arc, tel que schématiquement représenté aux figures 1 à 3, comprend un chariot dit principal 3 qui se déplace sur un guide circulaire (non représenté) parallèlement à la gorge circulaire 4 délimitée par les deux surfaces d'extrémité chanfreinées de deux tubes métalliques 5 et 6 à souder l'un à l'autre (figure 3). Un chariot dit secondaire 7 dont la platine 7a est reliée par un ensemble de liaison 8 au chariot principal 3, porte un bloc-support 9 de deux torches T1 et T2 formant une unité de soudage. Le chariot secondaire 7 est équipé d'un dispositif de guidage mécanique 10 objet de l'invention et qui va être décrit en détail ci-après.

Le dispositif de guidage 10 comprend des organes de palpage et des organes de roulement. Dans un mode préférentiel de réalisation de l'invention, il y a deux organes de palpage 11a et 11b, et deux organes de roulement 12a et 12b.

Les deux organes de palpage 11a et 11b sont décalés l'un par rapport à l'autre en étant respectivement situés vers l'avant et vers l'arrière du chariot secondaire 7, en considérant la direction de déplacement D du chariot principal 3, et il en est de même pour la position des deux organes de roulement 12a et 12b.

Les deux organes de palpage 11a et 11b pénètrent dans la gorge 4 et viennent respectivement au contact des deux parois 4a et 4b de celle-ci. Alors que les deux organes de roulement 12a et 12b viennent respectivement au contact des deux surfaces des deux pièces 5 et 6 qui bordent la gorge 4.

Dans le premier exemple de réalisation de la figure 1, le dispositif de guidage 10 est constitué par deux galets 13. Le boudin de chaque galet forme l'organe de palpage 11a ou 11b, alors que son bandage forme l'organe de roulement 12a ou 12b.

Chaque galet 13 et supporté à rotation par un bossage latéral 14 solidaire de la platine 7a du chariot secondaire 7, son axe de rotation étant perpendiculaire au plan médian PM de la gorge 4 pour que son bandage roule sur la pièce métallique associée 5 ou 6, sensiblement parallèlement à la gorge 4.

Le dispositif de guidage 10 porté par la platine 7a du chariot secondaire 7 est articulé suivant deux axes de pivotement A1 et A2, perpendiculaires l'un à l'autre. L'axe A1 est perpendiculaire à la direction de déplacement D du chariot principal 3 et est situé dans un plan parallèle au plan médian PM de la gorge 4, de manière à ce que le dispositif de guidage 10 puisse pivoter autour de cet axe A1 et permettre aux organes de palpage 11a et 11b de suivre la géométrie des parois de la gorge 4. L'axe A2 est perpendiculaire au plan médian PM de la gorge 4, de manière à ce que le dispositif de guidage 10 puisse pivoter autour de cet axe A2 et permettre aux organes de roulement 12a et 12b de suivre la géométrie des surfaces des pièces 5 et 6 qui bordent la gorge 4.

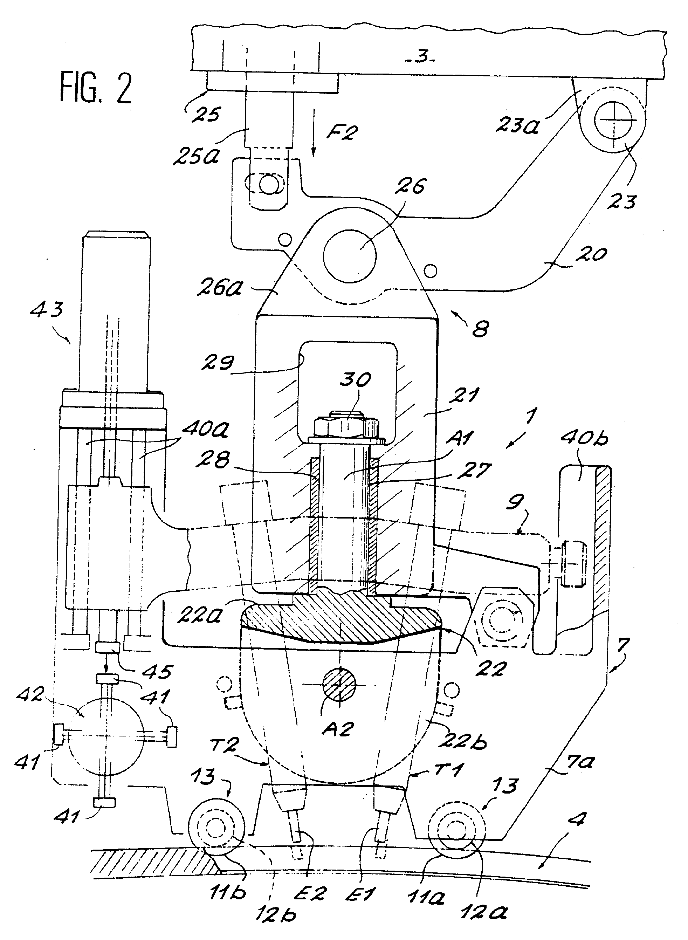

En se reportant à la figure 2, l'ensemble de liaison 8 précité entre le chariot principal 3 et le chariot secondaire 7 comprend un bras de liaison 20, une pièce de liaison 21 et un étrier 22. Le bras de liaison 20 est articulé vers une extrémité autour d'un axe 23 supporté par une chape 23a fixée au chariot principal 3. Vers son autre extrémité, le bras de liaison 20 reçoit, de manière articulée, l'extrémité de la tige de piston 25a d'un vérin 25 dont le cylindre est fixé au chariot principal 3. La fonction de ce vérin 25 sera explicitée plus loin. La pièce de liaison 21 est articulée, à une extrémité, au bras de liaison 20 au moyen d'une chape 26a et d'un axe 26, et elle vient en appui, à son autre extrémité, sur l'embase 22a de l'étrier 22.

L'axe de pivotement A1 du dispositif de guidage 10 est formé par un pivot solidaire par une extrémité de l'embase 22a de l'étrier 22 et qui s'étend perpendiculairement à celle-ci. L'axe de pivotement A1 traverse un palier 27 logé dans un passage 28 prévu dans la pièce de liaison 21 pour déboucher par son extrémité libre dans une ouverture centrale 29 de la pièce de liaison 21. L'extrémité libre de l'axe A1 est filetée pour recevoir un écrou 30 et immobiliser ainsi axialement l'axe A1.

L'axe de pivotement A2 du dispositif de guidage 10, perpendiculaire à l'axe A1, est supporté par deux flasques 22b de l'étrier 22, axe A2 sur lequel est articulée la platine 7a du chariot secondaire 7 qui porte le dispositif de guidage 10.

Ainsi le dispositif de guidage 10 peut pivoter, d'une part, directement autour de l'axe A2 et, d'autre part, à l'intérieur du palier 27 par l'intermédiaire de l'étrier 22 et l'axe A1.

Le chariot secondaire 7 est soumis en permanence à des forces de poussée F1 et F2 qui se répercutent respectivement sur les organes de palpape 11a, 11b et les organes de roulement 12a, 12b.

Des moyens de poussée latérale (figure 1), tel un ressort 32, sont prévus pour solliciter en permanence le chariot secondaire 7 en pivotement autour de l'axe A1 de manière à ce que les deux organes de palpage 11a et 11b restent en permanence au contact des parois associées 4a et 4b de la gorge 4 et quelles que soient les variations de largeur de celle-ci. Ces moyens de poussée sont bien évidemment décalés par rapport a l'axe A1, de manière à ce que la force F1 qui en résulte donne naissance à un couple sollicitant le pivotement du chariot secondaire 7. Le ressort 32 est logé dans le fond d'un boîtier 33 fixé à la platine 7a du chariot secondaire 7, et prend appui sur un pion 34 qui fait saillie hors du boîtier 33. Le pion 34 vient en appui sur l'extrémité d'une vis 35 supportée par un bossage 36 de la pièce de liaison 21. Cette vis 35 permet de déplacer le pion 34 et de régler ainsi la force de poussée F1 du ressort 32 qui sollicite la platine 7a du chariot secondaire 7 en pivotement suivant l'axe A1.

La force de poussée F2 (figure 2) est exercée par le vérin 25 précité qui pousse sur le bras de liaison 20 et par conséquent sur la pièce de liaison 21 et sur l'étrier 22, pour que le chariot secondaire 7 soit sollicité en appui permanent par l'intermédiaire des organes de roulement 12a et 12b du dispositif de guidage 10 sur les tubes 5 et 6.

Ainsi, la combinaison des forces F1 et F2 fait que les boudins des galets 13 sont en contact permanent avec les parois 4a et 4b de la gorge 4 (force F1), et que les bandages des galets 13 sont en contact permanent avec les tubes 5 et 6 de part et d'autre de la gorge 4 (force F2).

Dans l'exemple considéré ici, le bloc-support 9 porte deux torches T1 et T2 situées entre les deux ensembles de palpage et de roulement 11a, 12a et 11b, 12b.

Avantageusement, le bloc-support 9 est mobile par rapport au chariot secondaire 7, de manière à pouvoir régler la profondeur de pénétration des électrodes E1 et E2 à l'intérieur de la gorge 4 après chaque passe de soudage. A cet effet, le bloc-support 9 est monté coulissant le long de deux glissières 40a et 40b (figure 2) portées par la platine 7a du chariot secondaire 7. Pour régler de manière très précise la profondeur de pénétration des électrodes E1 et E2, il est avantageusement prévu des butées 41 de hauteur différente montées sur un barillet tournant 42. Un vérin 43 fixé à la platine 7a du chariot secondaire 7 a sa tige de piston 44 rendue solidaire du bloc-support 9 pour le déplacer le long des glissières 40a et 40b, afin d'amener un pion 45 du bloc-support 9 au contact de la butée 41 sélectionnée au niveau du barillet 42. En outre, le bloc-support 9 peut également être animé d'un mouvement d'oscillation de fréquence et d'amplitude réglables par un moyen mécanique ou électrique, connu en soi.

Dans une variante illustrée à la figure 4, chaque organe de palpage 11a ou 11b est constitué par un grain latéral porté à l'extrémité d'un doigt 50 qui pénètre à l'intérieur de la gorge 4. Ce doigt, tel une tige verticale, est monté coulissant dans un manchon 51 qui présente une ouverture latérale filetée 52 dans laquelle s'engage un moyen de blocage 53 tel une vis, de manière à régler la profondeur de pénétration de chaque grain. Ce réglage combiné avec le réglage du bloc support 9 permet d'augmenter considérablement la précision du soudage. Un moyen de palpage 11a ou 11b constitué par un grain est mieux adapté que le boudin d'un galet dans le cas d'une gorge étroite. En outre, sachant que des projections de soudure 60 sur les parois 4a et 4b de la gorge 4 sont inévitables au cours des différentes passes de soudage, le fait d'effectuer l'action de palpage par deux éléments distincts (bille + grain), on diminue les inconvénients résultants de ces projections. En effet, dans le cas d'un galet, celui-ci aurait tendance à se relever lorsque son boudin rencontre ces projections 60.

D'une manière générale, le dispositif de guidage 10 est formé de deux ensembles de palpage 11a, 12a et 11b, 12b avec les torches T1 et T2 placées de préférence entre ces deux ensembles. Dans le cas de l'utilisation de galets 13, les zones de palpage du boudin et du bandage sont au droit l'une de l'autre, alors que les zones de palpage du grain et de la bille (ou galet plat) peuvent être décalées l'une par rapport à l'autre.

Le système de guidage mécanique conforme à l'invention est particulièrement adapté pour le soudage bout à bout des tronçons de tube des conduites immergées au fond de la mer pour l'exploitation des gisements pétroliers. Bien entendu, le système de guidage est essentiellement utilisé au cours des premières passes de soudure, c'est-à-dire tant que les organes de palpage peuvent pénétrer dans la gorge, la fin de l'opération de soudage étant réalisée par exemple par un autre poste de soudage classique.

D'une manière générale, le système de guidage permet de réaliser aussi bien des soudures rectilignes horizontales et verticales que circulaires.

## Revendications

1. Système mécanique de guidage automatique d'une ou plusieurs torches (T1,T2) d'une unité de soudage à l'arc dans une gorge (4) délimitée par les surfaces d'extrémité chanfreinées (4a,4b) de deux pièces métalliques (5,6) à souder l'une à l'autre, du type comprenant un chariot principal (3) qui se déplace le long d'un guide fixe parallèle à la gorge, un chariot secondaire (7) qui est relié au chariot principal par un ensemble de liaison articulé (8) et qui est équipé d'un bloc-support de torche(s) (9) et d'un dispositif de guidage (10) comprenant des organes de roulement en contact avec les surfaces des pièces métalliques bordant ladite gorge et des organes de palpage qui pénètrent à l'intérieur de la gorge, caractérisé en ce que le dispositif de guidage (10) comprend un premier ensemble de palpage et de roulement (11a,12a) qui est situé à l'avant du chariot secondaire (7), en considérant le sens de déplacement (D) du chariot principal (3), et qui comporte un organe de palpage avant (11a) en contact avec l'une (4a) des deux parois latérales (4a et 4b) de la gorge (4) et un organe de roulement avant (12a) roulant sur la surface de l'une (5) des deux pièces métalliques (5,6) d'un côté de la gorge (4), en ce que le dispositif de guidage (10) comprend en outre un second ensemble de palpage et de roulement (11b,12b) qui est situé à l'arrière du chariot secondaire (7) et qui comporte un organe de palpage arrière (11b) en contact avec l'autre paroi latérale (4a) de la gorge (4) et un organe de roulement arrière (12b) roulant sur la surface de l'autre pièce métallique (6) de l'autre côté de la gorge (4), en ce que la ou les torche (s) (T1, T2) sont montées sur le chariot secondaire (7) de façon à se trouver entre les premier et second ensembles de palpage et de roulement, en ce que l'ensemble de liaison articulé (8) comprend un premier axe de pivotement (A1) qui est perpendiculaire à la direction de déplacement (D) du chariot principal (3) et situé dans un plan parallèle au plan médian (PM) de la gorge (4), et un deuxième axe de pivotement (A2) qui est perpendiculaire à la direction de déplacement (D) du chariot principal (3) et perpendiculaire au plan médian (PM) de la gorge (4), les premier et second axes de pivotement (A1, A2) étant situés entre les premier et second ensembles de palpage et de roulement (11a,12a et 11b,12b), et en ce qu'il est en outre prévu des moyens de poussée latérale (32) qui agissent sur le chariot secondaire (7) pour le solliciter en pivotement autour de l'axe (A1) de manière à ce que chaque élément de palpage (11a ou 11b) reste au contact de la paroi associée (4a ou 4b) de la gorge (4), et des moyens de poussée (25) qui sollicitent en permanence les organes de roulement (12a ou 12b) du chariot secondaire (7) en appui sur les pièces métalliques respectivement y associées (5 ou 6).

2. Système mécanique de guidage selon la revendication 1, caractérisé en ce que les moyens de poussée latérale (32) sont constitués par un ressort.

3. Système mécanique de guidage selon la revendication 1 ou 2, caractérisé en ce que les deux axes de pivotement (A1,A2) sont supportés par un étrier (22), le chariot secondaire (7) étant monté pivotant autour de l'axe (A2), l'axe (A1) solidaire de l'étrier (22) étant monté dans un palier (27) de l'ensemble de liaison articulé (8) relié au chariot principal (3).

4. Système mécanique de guidage selon l'une quelconque des revendications précédentes, caractérisé en ce que le dispositif de guidage (10) comprend deux galets (13), chaque galet ayant un boudin latéral qui forme un des organes de palpage, et un bandage qui forme un des organes de roulement.

5. Système mécanique de guidage selon l'une quelconque des revendications 1 à 4, caractérisé en ce que chaque organe de palpage est constitué par un grain porté à l'extrémité d'un doigt (50) qui pénètre dans la gorge (4).

6. Système mécanique de guidage selon la revendication 5, caractérisé en ce que la profondeur de pénétration du doigt (50) dans la gorge (4) est réglable.

7. Système mécanique de guidage selon la revendication 5 ou 6, caractérisé en ce que chaque organe de roulement (12a,12b) est une bille.

8. Système mécanique de guidage selon la revendication 5 ou 6, caractérisé en ce que chaque organe de roulement (12a,12b) est un galet plat.

## Patentansprüche

1. Mechanisches Führungssystem für einen oder mehrere Schweißköpfe (T1,T2) einer Lichtbogenschweißeinheit in einem Schlitz (4), der durch die abgeschrägten Endflächen (4a,4b) von zwei miteinander zu verschweißenden Metallstücken (5,6) begrenzt ist, von dem Typ, der einen Hauptwagen oder -schlitten (3), der entlang einer festen Führung parallel zum Schlitz verschiebbar ist, einen Sekundärwagen oder -schlitten (7) aufweits, der mit dem Hauptwagen oder -schlitten durch eine gelenkige Verbindungskonstruktion (8) verbunden ist und der mit einem Halterblock (9) für den Schweißkopf/die Schweißköpfe und mit einer Führungseinrichtung (10) versehen ist, die Rollmittel, die mit den an den Schlitz angrenzenden Oberflächen der Metallstücke in Berührung stehen, und Fühlermittel aufweisen, die in das Innere des Schlitzes hinreichen, dadurch gekennzeichnet, daß die Führungseinrichtung (10) eine erste Fühler- und Rolleinrichtung (11a,12a), die in Verschiebungsrichtung (D) des Hauptwagens oder -schlittens (3) vorn im Sekundärwagen oder -schlitten (7) angeordnet ist, und ein vorderes Fühlermittel (11a) in Berührung mit einer (4a) der beiden Seitenwände (4a und 4b) des Schlitzes (4) und ein vorderes Rollmittel (12a) aufweist, das auf der Oberfläche eines (5) der beiden Metallstücke (5,6) auf der einen Seite des Schlitzes (4) abrollt, daß die Führungseinrichtung (10) weiter eine zweite Fühlerund Rolleinrichtung (11b,12b) aufweist, die hinten im Sekundärwagen oder -schlitten (7) angeordnet ist und ein hinteres Fühlermittel (11b) in Berührung mit der anderen (4b) Seitenwand des Schlitzes (4) und ein hinteres Rollmittel (12b) aufweist, das auf der Oberfläche des anderen Metallstücks (6) auf der anderen Seite des Schlitzes (4) abrollt, daß der oder die Schweißköpfe (T1,T2) auf dem Sekundärwagen oder -schlitten (7) in der Weise montiert ist bzw. sind, daß sie sich zwischen den ersten und zweiten Fühler- und Rolleinrichtungen befinden, daß die gelenkige Verbindungskonstruktion (8) eine erste Schwenkachse (A1), die senkrecht zur Verschiebungsrichtung (D) des Hauptwagens oder -schlittens (3) und in einer Ebene angeordnet ist, die parallel zur Mittelebene (PM) des Schlitzes (4) ist, und eine zweite Schwenkachse (A2) aufweist, die senkrecht zur Verschiebungsrichtung (D) des Hauptwagens oder -schlittens (3) und senkrecht zur Mittelebene (PM) des Schlitzes (4) ist, wobei die ersten und zweiten Schwenkachsen (A1,A2) zwischen den ersten und zweiten Fühler- und Rolleinrichtungen (11a,12a und 11b,12b) angeordnet sind, und daß außerdem Seitendruckmittel (32), die auf den Sekundärwagen oder -schlitten (7) einwirken, um ihn für eine Schwenkbewegung um die Achse (A1) auf die Weise zu beaufschlagen, daß jedes Fühlerelement (11a oder 11b) in Berührung mit der entsprechenden Wand-(4a oder 4b) des Schlitzes (4) bleibt, und Druckmittel (25) vorgesehen sind, die dauernd die Rollmittel (12a oder 12b) des Sekundärwagens oder -schlittens (7) so beaufschlagt, daß diese von den ihnen zugeordneten Metallstücken (5 oder 6) abgestützt werden.

2. Mechanisches Führungssystem nach Anspruch 1, dadurch gekennzeichnet, daß die Seitendruckmittel (32) durch eine Feder gebildet sind.

3. Mechanisches Führungssystem nach Anspruch 1 oder 2, dadurch gekennzeichnet, daß die beiden Schwenkachsen (A1,A2) durch einen Bügel (22) gehalten sind, wobei der Sekundärwagen oder -schlitten (7) um die Achse (A2) schwenkbar montiert ist, wobei die mit dem Bügel (22) einstückige Achse (A1) in einem Lager (27) der gelenkigen Verbindungskonstruktion (8) befestigt ist, die mit dem Hauptwagen oder -schlitten (3) verbunden ist.

4. Mechanisches Führungssystem nach einem der vorangehenden Ansprüche, dadurch gekennzeichnet, daß die Führungseinrichtung (10) zwei Rollen (13) aufweist, wobei jede Rolle einen seitlichen Wulst, der eines der Fühlermittel bildet, und einen Radreifen aufweist, der eines der Rollmittel bildet.

5. Mechanisches Führungssystem nach einem der Ansprüche 1 bis 4, dadurch gekennzeichnet, daß jedes Fühlermittel durch ein Korn oder Kügelchen gebildet ist, das am Ende eines Fingers (50) gehalten ist, der in den Schlitz (4) hineinreicht.

6. Mechanisches Führungssystem nach Anspruch 5, dadurch gekennzeichnet, daß die Tiefe des Eindringens des Fingers (50) in den Schlitz (4) einstellbar ist.

7. Mechanisches Führungssystem nach Anspruch 5 oder 6, dadurch gekennzeichnet, daß jedes Rollmittel (12a,12b) eine Kugel ist.

8. Mechanisches Führungssystem nach Anspruch 5 oder 6, dadurch gekennzeichnet, daß jedes Rollmittel (12a,12b) eine flache Rolle ist.

## Claims

1. A mechanical system for automatically guiding one or more torches (T1, T2) of an arc welding unit in a groove (4) delimited by the bevelled end surfaces (4a, 4b) of two metal parts (5, 6) to be welded together, of the type comprising a main carriage (3) which moves along a fixed guide parallel to the groove, a secondary carriage (7) which is connected to the main carriage by an articulated linking assembly (8) and which is fitted with a torch support block (9) and a guiding device (10) comprising rolling elements in contact with the surfaces of the metal parts bordering the said groove and tracing elements which penetrate the interior of the groove, characterised in that the guiding device (10) comprises a first tracing and rolling assembly (11a, 12a) which is located at the front of the secondary carriage (7) with respect to the direction of movement (D) of the main carriage (3) and which comprises a front tracing element (11a) in contact with one (4a) of the two side walls (4a and 4b) of the groove (4) and a front rolling element (12a) rolling on the surface of one (5) of the two metal parts (5, 6) on one side of the groove (4), in that the guiding device (10) furthermore comprises a second tracing and rolling assembly (11b, 12b) which is located at the rear of the secondary carriage (7) and which comprises a rear tracing element (11b) in contact with the other side wall (4a) of the groove (4) and a rear rolling element (12b) rolling on the surface of the other metal part (6) on the other side of the groove (4), in that the torch or torches (T1, T2) are mounted on the secondary carriage (7) so as to be located between the first and second tracing and rolling assemblies, in that the articulated linking assembly (8) comprises a first swivel pin (A1) which is perpendicular to the direction of movement (D) of the main carriage (3) and located in a plane parallel to the central plane (PM) of the groove (4), and a second swivel pin (A2) which is perpendicular to the direction of movement (D) of the main carriage (3) and perpendicular to the central plane (PM) of the groove (4), the first and second swivel pins (A1, A2) being located between the first and second tracing and rolling assemblies (11a, 12a and 11b, 12b), and in that furthermore lateral thrust means (32) are provided which act on the secondary carriage (7) to cause it to swivel round the pin (A1) in such a way that each tracing element (11a or 11b) remains in contact with the associated wall (4a or 4b) of the groove (4), and thrust means (25) are provided which cause the rolling elements (12a or 12b) of the secondary carriage (7) to rest permanently on the associated metal parts (5 or 6) respectively.

2. A mechanical guiding system according to claim 1, characterised in that the lateral thrust means (32) are formed by a spring.

3. A mechanical guiding system according to claim 1 or 2, characterised in that the two swivel pins (A1, A2) are supported by a stirrup (22), the secondary carriage (7) being mounted so as to swivel round the pin (A2), the pin (A1) integral with the stirrup (22) being mounted in a bearing (27) of the articulated linking assembly (8) connected to the main carriage (3).

4. A mechanical guiding system according to any one of the preceding claims, characterised in that the guiding device (10) comprises two rollers (13), each roller having a lateral flange which forms one of the tracing elements and a casing which forms one of the rolling elements.

5. A mechanical guiding system according to any one of claims 1 to 4, characterised in that each tracing element is formed by a grain carried at the end of the finger (50) which penetrates the groove (4).

6. A mechanical guiding system according to claim 5, characterised in that the depth of penetration of the finger (50) in the groove (4) is adjustable.

7. A mechanical guiding system according to claim 5 or 6, characterised in that each rolling element (12a, 12b) is a ball.

8. A mechanical guiding system according to claim 5 or 6, characterised in that each rolling element (12a, 12b) is a flat roller.
